# EUROPÄISCHE PATENTANMELDUNG

(11) **EP 2 067 688 A2**
(43) Veröffentlichungstag der Anmeldung: **10.06.2009**
(21) Anmeldenummer: 08169340.0
(22) Anmeldetag: 18.11.2008
(51) Int. Cl.: B62D 5/083

(54) **Elektro-Hydraulisches Lenksystem**

(30) Priorität: 04.12.2007 DE 102007055697
(71) Anmelder: ZF-Lenksysteme GmbH, 73527 Schwäbisch Gmünd (DE)
(72) Erfinder: Bernhard, Werner, 73563, Mögglingen (DE); Kogel, Walter, 73453, Abtsgmünd (DE); Kurz, Thorsten, 73453, Abtsgmünd/Untergröningen (DE)

(57) **Zusammenfassung**

Ein Elektro-Hydraulisches Lenksystem ist mit einer Eingangswelle (1), mit einem Drehschieber (2), einer Abtriebswelle (4), einer Torsionsfeder (3) zwischen dem Drehschieber (2) und der Abtriebswelle (4), einer mit der Abtriebswelle (4) verbundenen Ventilbuchse (5), einer in die Ventilbuchse (5) mündenden Druckmittelzulauf (6) und einem Druckmittelrücklauf (7) zwischen der Abtriebswelle (4) und dem Drehschieber (2) versehen. In dem Druckmittelrücklauf (7) ist zwischen der Abtriebswelle (4) und dem Drehschieber (2) ein Kolben (8) angeordnet. Der Kolben (8) ist auf einer Seite verdrehfest, aber axial verschiebbar in der Abtriebswelle (4) fixiert und auf der anderen Seite mit einem Mitnahmeprofil (10) zum Drehschieber (2) versehen. Ein Schließglied (13) bewirkt eine in Richtung auf den Druckmittelzulauf (6) wirkende Schließkraft auf den Kolben (8), die kleiner ist als die Druckkraft auf den Kolben (8) bei Druckmittelzufuhr über den Druckmittelzulauf (6) zur Zuschaltung der Hydraulik.

## Beschreibung

Die Erfindung betrifft ein Elektro-Hydraulisches Lenksystem für ein Fahrzeug nach dem Oberbegriff von Anspruch 1.

### Stand der Technik

Ein Lenksystem aus der eingangs erwähnten Art ist z. B. aus der DE 10 2004 006 833 A1 bekannt.

Beim Betrieb einer hydraulischen Lenkung, wie sie z. B. aus der DE 42 23 536 A1 bekannt ist, stellt sich, je nach Auslegung, bei einem bestimmten Verdrehwinkel am Lenkrad eine entsprechende Lenkunterstützung ein. Der Zusammenhang der beiden Größen ist dabei maßgebend für das Lenkgefühl.

Nachteilig ist jedoch, dass in Kombination eines elektromechanischen und eines hydraulischen Lenksystems sich bei rein elektrischen Betrieb ein sogenanntes schwammiges Lenkgefühl einstellt. Dieses nachteilige Verhalten ist systembedingt und resultiert aus der Reihenschaltung zweier Torsionsfedern, wobei jeweils eine für die hydraulische und eine für die elektrische Unterstützung notwendig ist.

Zur Erzielung der jeweils geforderten hydraulischen bzw. elektrischen Unterstützung werden die beiden Torsionsfedern je nach der geforderten Kennlinie ausgelegt. Aufgrund der vorstehend erwähnten Reihenschaltung der beiden Torsionsfedern addiert sich der Verdrehweg und das ganze System wird weicher. Praktisch stellt sich bei gleicher Steifigkeit der beiden Federn ein doppelter Winkel am Lenkrad ein.

### Offenbarung der Erfindung

### Technische Aufgabe

Der vorliegenden Erfindung liegt die Aufgabe zugrunde ein Lenksystem der eingangs erwähnten Art derart auszugestalten, dass der vorstehend beschriebene Nachteil vermieden wird und dass bei Betrieb des ElektroHydraulischen Lenksystems die zwei unterschiedlichen Betriebszustände bei Betrieb wenigstens annähernd stetig ineinander übergehen. Dabei soll einerseits der Wechsel des Betriebszustandes erkannt und andererseits die dadurch hervorgerufenen negativen Eigenschaften bezüglich der Steifigkeit optimiert bzw. wenigstens deutlich verbessert werden.

### Technische Lösung

Erfindungsgemäß wird diese Aufgabe durch die im kennzeichnenden Teil von Anspruch 1 genannten Merkmale gelöst.

Durch die erfindungsgemäße Anordnung des Kolbens in dem Druckmittelrücklauf wird ein zusätzliches Kupplungsteil geschaffen. Bei einem drucklosen Rücklauf, z. B. einem Starten des Fahrzeuges oder einem rein elektrischen Betrieb, wenn keine hydraulische Unterstützung erfolgt, wird der Kolben als Kupplungsteil über das Mitnahmeprofil an den Drehschieber gepresst, womit eine mechanische Verbindung zwischen der Abtriebswelle und dem Drehschieber hergestellt wird. Die Torsionsfeder im Inneren des Systems wird durch den erfindungsgemäßen Kolben damit zusätzlich verstärkt bzw. sogar überbrückt, wodurch das Gesamtlenksystem direkter und damit in gewünschter Weise steifer wird.

Bei Ein- bzw. Zuschalten der Hydraulik wird das einströmende Druckmittelmedium an dem erfindungsgemäßen Kolben angestaut und der Druck steigt entsprechend. Übersteigt der angestaute Druck dabei die Schließkraft des auf den Kolben wirkenden Schließgliedes, öffnet der Kolben und die Mitnahme des Drehschiebers wird durch ein Außereingriffkommen des Mitnahmeprofils aufgehoben. Durch das jedoch weiter vorhandene Druckgefälle in dem Druckmittelrücklauf, der im Allgemeinen in einem Ringspalt angeordnet ist, bleibt der Kolben jedoch weiter druckbelastet und die Kupplung weiterhin geöffnet, denn das Mitnahmeprofil greift auch in diesem Falle nicht mehr in das entsprechende Gegenprofil des Drehschiebers ein. Auf diese Weise bleibt das ursprüngliche Lenkgefühl des elektrisch unterstützten Lenksystems erhalten.

Ein weiterer Vorteil der erfindungsgemäßen Lösung besteht darin, dass keine besonderen Schaltvorgänge erforderlich sind, denn das System erkennt selbständig den jeweiligen Betriebszustand und es erfolgt ein annähernd stetiges Schalten. Weiterhin verbleibt es bei einem konstanten direkten Lenken.

Von Vorteil ist auch, dass für die erfindungsgemäße Lösung kein zusätzlicher Einbauraum erforderlich ist, denn für den Kolben kann der freie Innenraum zwischen der im Inneren des Drehschiebers angeordneten Torsionsfeder, im Allgemeinen einem Drehschieber, und der Abtriebswelle verwendet werden. Der ringförmige Zwischenraum dient in gleicher Weise wie bisher auch als Druckmittelrücklauf.

Vorteilhaft ist weiterhin auch, dass für die erfindungsgemäße Lösung nur wenige Verbindungsteile erforderlich sind und bei Bedarf auch eine zerstörungsfreie Demontage der Baugruppe möglich ist.

Nachfolgend wird ein Ausführungsbeispiel der Erfindung anhand der Zeichnungen prinzipmäßig erläutert.

### Kurze Beschreibung der Zeichnungen

Es zeigt:

Fig. 1 einen Längsschnitt durch das erfindungsgemäße Lenkgetriebe;

Fig. 2a einen vergrößerten Schnitt nach dem Kreisausschnitt X der Fig. 1;

Fig. 2b einen vergrößerten Schnitt nach dem Kreisausschnitt Y der Fig. 1. Ausführungsform der Erfindung

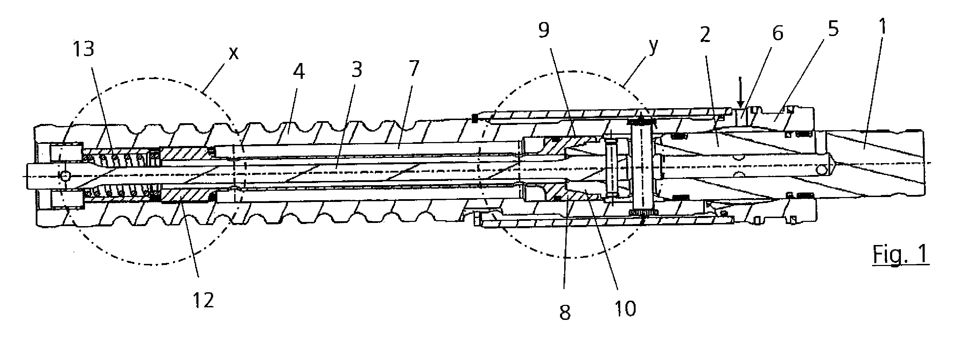

Die Fig. 1 zeigt ein hilfskraftbetätigtes Lenkgetriebe in grundsätzlich herkömmlichen Aufbau, weshalb nachfolgend nur auf die erfindungsgemäß wesentlichen Teile näher eingegangen wird. Neben der eingangs bereits erwähnten Schrift wird hierzu beispielsweise auch auf die DE 198 30 747 A1 und die DE 42 23 536 A1 verwiesen.

Eine in einem nicht dargestellten Ventilgehäuse gelagerte Eingangswelle 1, z. B. eine Längsspindel, die im vorderen Abschnitt als Drehschieber 2 ausgebildet ist, ist über den Drehstab 3 mit einer Abtriebswelle 4, die bei dem Ausführungsbeispiel als Schnecke ausgebildet ist, verbunden. Der Drehschieber 2 befindet sich im Inneren einer mit der Abtriebswelle 4 verbundenen Ventilbuchse 5. Der Drehschieber 2 und die Ventilbuchse 5 bilden in bekannter Weise ein Drehschieberventil mit zusammenwirkenden Steuernuten und dazugehörigen Bohrungen. In die Ventilbuchse 5 mündet ein Druckmittelzulauf 6, der mit einer nicht dargestellten Hochdruckpumpe in Verbindung steht.

Über nicht dargestellte Nuten zur Wirkverbindung zwischen der Ventilbuchse 5 und dem Drehschieber 2 wird das Druckmittel in einen Ringspalt zwischen dem Drehstab 3 und der Innenwand der hohlen Abtriebswelle 4 als Druckmittelrücklauf 7 durch das Drehschieberventil hindurch zurück geleitet.

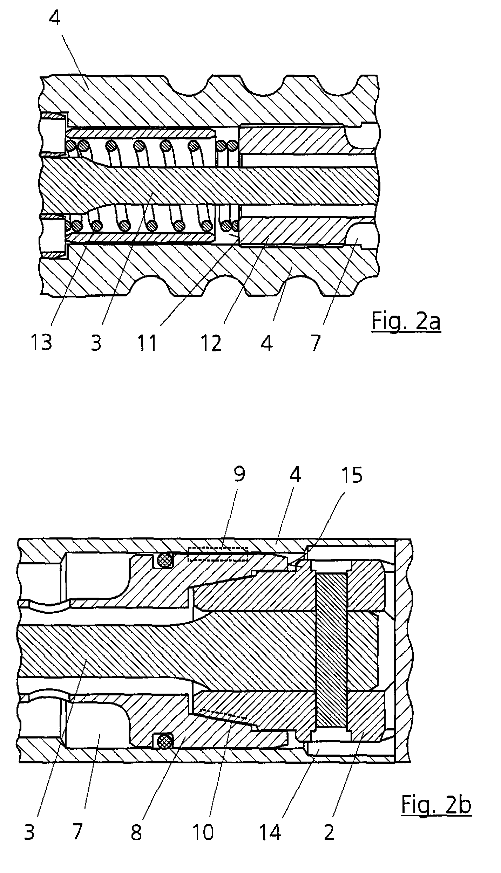

Wie aus der Fig. 1 und insbesondere aus der vergrößerten Darstellung in der Fig. 2b ersichtlich ist, ist in dem als Druckmittelrücklauf 7 dienenden Ringspalt ein Kolben 8 angeordnet, der gleichzeitig auch als Kupplungsteil wirkt. Der Kolben 8 liegt an seinem Außenumfang an der inneren Umfangswand der Abtriebswelle 4 an, wobei die Verbindung zwischen dem Kolben 8 und der Abtriebswelle 4 durch Mitnahmeglieder 9 in Umfangsrichtung verdrehfest, aber axial verschiebbar, erfolgt. Als Mitnahmeglieder 9 sind verschiedene Ausgestaltungen möglich, die hier nicht näher erläutert werden. Eine Möglichkeit hierfür besteht z. B. in der Ausbildung von in axialer Richtung verlaufenden vorstehenden Rippen, die in Längsnuten des anderen Teiles eingreifen.

Auf der dem Drehschieber 2 zugewandten Seite des Kolbens 8 ist in seine innere Umfangswand, die den Drehschieber 2 außenseitig teilweise umfasst, ein Mitnahmeprofil 10 eingeformt. Für das Mitnahmeprofil 10 sind ebenfalls verschiedene Ausgestaltungen wie für die Mitnahmeglieder 9 möglich. Eine einfache Lösung kann z. B. in der Ausgestaltung in Form einer Klauenkupplung sein.

Auf der von dem Drehschieber 2 abgewandten Seite des Kolbens 8 ist an eine Stirnseite 11 eine Verlängerung 12 des Kolbens 8 als Schließglied in Form einer Kolbenfeder 13 angedrückt, die sich auf der von der Stirnseite 11 abgewandten Seite an der Abtriebswelle 4 bzw. einem damit verbundenen Zwischenglied abstützt.

Nachfolgend wird die Wirkungsweise des vorstehend erläuterten Lenksystems beschrieben.

Bei einem reinen elektrischen Betrieb, wenn keine hydraulische Unterstützung stattfindet, wird der Kolben 8 mit seinem vorderen Kupplungsteil durch die als Schließglied wirkende Kolbenfeder 13 mit seinem Mitnahmeprofil 10 in das entsprechende Gegenprofil des Drehschiebers 2 gepresst, wodurch eine mechanische Verbindung zwischen der Abtriebswelle 4 und der Eingangswelle 1 hergestellt wird. Der Drehstab 3 als Torsionsfeder im Inneren des Systems wird auf diese Weise durch die direkte Verbindung über den Kolben 8 zusätzlich verstärkt und das Gesamtlenksystem wird damit direkter und steifer.

Wird nun die Hydraulik zugeschaltet und über den Druckmittelzulauf 6 erfolgt ein Druckaufbau im Druckraum 14, wird das Druckmittel an der vorderen Stirnseite 15 des Kolbens 8 angestaut. Übersteigt dabei der angestaute Druck die Schließkraft der Kolbenfeder 13, so wird der Kolben 8 in der Darstellung gemäß Fig. 2b nach links in Richtung auf die entsprechend schwächer ausgebildete Kolbenfeder 13 gedrückt. Auf diese Weise löst sich das Mitnahmeprofil 10 aus dem Gegenprofil des Drehschiebers 2, ein Ringspalt zum Rücklauf 7 öffnet sich und die Mitnahme des Kolbens 8 durch den Drehschieber 2 wird freigegeben. Durch diese Maßnahme arbeitet anschließend das hydraulische Lenksystem wieder in herkömmlicher Weise.

Durch das weiter vorhandene Druckgefälle am Ringspalt bleibt der Kolben 8 auch während des hydraulischen Betriebes druckbelastet und damit das Kupplungsteil des Kolbens 8 gelöst bzw. offen.

## Patentansprüche

1. Elektro-Hydraulisches Lenksystem für ein Fahrzeug mit einem Drehschieber, mit einer Eingangswelle, einer Abtriebswelle, einer Torsionsfeder zwischen Drehschieber und Abtriebswelle, einer mit der Abtriebswelle verbundenen Ventilbuchse, einen in die Ventilbuchse mündenden Druckmittelzulauf und einem Druckmittelrücklauf zwischen der Abtriebswelle und dem Drehschieber, **dadurch gekennzeichnet, dass** in dem Druckmittelrücklauf (7) zwischen der Abtriebswelle (4) und dem Drehschieber (2) ein Kolben angeordnet ist, der auf einer Seite verdrehfest, aber axial verschiebbar in der Abtriebswelle (4) fixiert und der auf der anderen Seite mit einem Mitnahmeprofil (10) zum Drehschieber (2) versehen ist, wobei auch ein Schließglied (13) eine in Richtung auf den Druckmittelzulauf (6) wirkende Schließkraft erzeugt, die kleiner ist als die Druckkraft auf den Kolben (8) bei Druckmittelzufuhr über den Druckmittelzulauf zur Zuschaltung der Hydraulik.

2. Elektro-Hydraulisches Lenksystem nach Anspruch 1, **dadurch gekennzeichnet, dass** der Kolben (8) auf seinem äußeren Umfang verdrehfest, aber axial beweglich mit der Abtriebswelle 0(4) verbunden ist und dass das Mitnahmeprofil (10) an der Stirnseite oder der inneren Umfangswand des Kolbens (8) ausgebildet ist, welches in ein Gegenprofil in den Drehschieber (2) eingreift.

3. Elektro-Hydraulisches Lenksystem nach Anspruch 1 oder 2, **dadurch gekennzeichnet, dass** die Abtriebswelle (4) als Schnecke ausgebildet ist.

4. Elektro-Hydraulisches Lenksystem nach einem der Ansprüche 1 bis 3, **dadurch gekennzeichnet, dass** die Torsionsfeder (3) als Drehstab ausgebildet ist.

5. Elektro-Hydraulisches Lenksystem nach einem der Ansprüche 1 bis 4, **dadurch gekennzeichnet, dass** das Schließglied (13) als Kolbenfeder ausgebildet ist, die auf der von dem Druckmittelzulauf (6) abgewandten Seite des Kolbens (8) an diesem angreift.
